# EUROPÄISCHE PATENTSCHRIFT

(11) **EP 1 186 221 B1**
(45) Veröffentlichungstag und Bekanntmachung des Hinweises auf die Patenterteilung: **10.05.2006**
(21) Anmeldenummer: 01119873.6
(22) Anmeldetag: 17.08.2001
(51) Int. Cl.: A01D 34/66

(54) **Mähwerk, Abweisereinrichtung und Fahrzeug bzw. Gerät**
Mower with deflector
Faucheuse à déflecteur

(30) Priorität: 09.09.2000 DE 10044595
(43) Veröffentlichungstag der Anmeldung: 13.03.2002
(73) Patentinhaber: John Deere Enschede B.V., 7521 BE Enschede (NL); DEERE & COMPANY, Moline, Illinois 61265-8098 (US)
(72) Erfinder: Ferree, Philip E., Beaver Dam, WI 53916 (US); Kuhn, John B., Rubicon, WI 53078 (US); Heuvel, Christian J., 7558 GG Henglo (NL)
(74) Vertreter: Magin, Ludwig Bernhard

(56) Entgegenhaltungen:
- WO-A-96/20584
- DE-U- 29 816 120
- US-A- 4 890 446

## Beschreibung

Die Erfindung betrifft ein Mähwerk mit einem zumindest bodenwärts offenen und in einer Auswurfrichtung eine Auswurföffnung aufweisenden Gehäuse, wenigstens einem in dem Gehäuse angeordneten, antreibbaren Mähmesser, sowie einer in dem Gehäuse angeordneten Abweisereinrichtung, die das Mähmesser entlang seines Schneidkreises zumindest im wesentlichen umschließt und in einem der Auswurföffnung zugewandten Auswurfbereich wenigstens eine Aussparung aufweist, welche sich zumindest im wesentlichen über die gesamte Breite des Auswurfbereichs erstreckt, sowie ein Fahrzeug bzw. Gerät.

Die DE-U-298 16 120 zeigt eine Mähvorrichtung zum Anbau an ein Fahrzeug, die drei unterhalb eines Gehäuses angeordnete Sichelmähmesser zum Schneiden von Gras aufweist. Die Mähmesser sind von aneinander angrenzenden Gehäuseringen umschlossen und weisen in einem rückwärtigen Bereich eine Auswurföffnung auf, die von rückwärts betrachtet in der Art von zwei aneinander angrenzenden, im wesentlichen gleichschenkligen Dreiecken geringer Höhe ausgebildet ist, deren Grundflächen im Betrieb bodenwärts gerichtet sind.

Das der Erfindung zugrunde liegende Problem wird darin gesehen, daß bekannte Mähwerke ein nicht zufriedenstellendes Auswurfergebnis aufweisen und zum Verstopfen neigen, Abweisereinrichtungen für solche Mähwerke ungenügend arbeiten und Fahrzeuge bzw. Geräte, die mit solchen Mähwerken ausgestattet sind, insbesondere abhängig vom Zustand der jeweils zu schneidenden Vegetation, kein optimales Arbeitsergebnis liefern.

Dieses Problem wird erfindungsgemäß durch die Lehre der Patentansprüche 1 und 11 gelöst, wobei in den weiteren Patentansprüchen Merkmale aufgeführt sind, die die Lösung in vorteilhafter Weise weiterentwickeln.

Auf diese Weise wird einem Verstopfen der Aussparung entgegengewirkt, da es zu keinen bzw. nur geringfügigen Anlagerungen von Pflanzenabschnitten an der Abweisereinrichtung und zu einem gleichmäßigen Auswurf kommt. Die Aussparung erstreckt sich vorzugsweise im wesentlichen über den gesamten Auswurfbereich, so daß ein ungehinderter Auswurf von Pflanzenabschnitten durch die Messer gewährleistet wird. Um einen gleichmäßigen Auswurf zu bewirken, kann im Geist der vorliegenden Erfindung die Aussparung über ihre gesamte Erstreckung eine zumindest im wesentlichen gleiche Höhe aufweisen oder zumindest in vertikaler Richtung durch einen Steg begrenzt werden, der über die gesamte Erstreckung der Aussparung eine zumindest im wesentlichen gleiche Höhe aufweist. Der Schneidkreis des Mähmessers wird von der Abweisereinrichtung umschlossen, die vorzugsweise einen geringfügigen Abstand zu dem Mähmesser aufweist, um einem Blockieren des Mähmessers aufgrund von Kontakt mit sich an der Wandung anlagernden Pflanzenabschnitten bzw. einem erhöhten Kraftaufwand aufgrund eines Kontakts des Mähmessers mit solchen Anlagerungen entgegenzuwirken. Durch das verhältnismäßig dichte Umschließen des Schneidkreises des Mähmessers durch die Abweisereinrichtung kann es unter Umständen dazu kommen, daß bereits geschnittene Pflanzenabschnitte gegen deren Wandung prallen und innerhalb des Arbeitsbereichs der Messer verbleiben, wodurch sie nochmals geschnitten werden können. Da der Auswurfbereich nicht vollständig geöffnet ist, sondern nur eine Aussparung aufweist, kann sich im Inneren der Abweisereinrichtung durch die rotierenden Messer zumindest ein gewisser Unterdruck aufbauen, der bewirkt, daß zu schneidendes Pflanzenmaterial wie auch bereits abgetrennte Pflanzenabschnitte noch oben in den Wirkungsbereich der Mähmesser hineingezogen werden. Dadurch wird ein möglichst gutes Zerkleinern des Pflanzenmaterials sowie eine gute Schnittqualität erzielt. Darüber hinaus kann durch den auftretenden Unterdruck bewirkt werden, daß flachliegendes oder auch feuchtes Gras von dem Mähmesser geschnitten werden kann, so daß auch unter schwierigen Bedingungen mit einem guten Arbeitsergebnis zu rechnen ist. Hierzu ist es günstig, wenn ein Mähmesser verwendet wird, das derart ausgebildet ist, daß es in der Art eines Gebläses wirken kann. Solche Mähmesser sind bekannt und werden in verschiedenen Ausführungsformen in der Mäh- sowie in der Mulchtechnik eingesetzt. Das Mähwerk ist vorzugsweise derart ausgeführt, daß es wenigstens ein Mähmesser aufweist, das um eine zumindest im wesentlichen vertikale Achse bzw. in einer zumindest im wesentlichen horizontalen Ebene umläuft. Bei einem solchen Mähmesser kann es sich um ein Sichelmesser handeln, das beispielsweise in der Art eines Messerbalkens mit üblicherweise zumindest zwei sich punktsymmetrisch gegenüberliegenden Schneiden sowie optional mit zwei oder mehr Gebläseflügeln ausgebildet ist.

Die Abweisereinrichtung kann unterhalb der Aussparung einen Steg aufweisen, der die Aussparung nach unten begrenzt. Auf diese Weise kann ein Arbeitsergebnis erzielt werden, das dem Ergebnis eines Mulchwerks ähnelt, da die abgetrennten Pflanzenabschnitte verstärkt im Inneren der Abweisereinrichtung gehalten und dadurch mehrfach geschnitten werden. Durch die Aussparung ist ein Auswurf in vertikaler Richtung und nicht nur ein Herausfallen von Pflanzenabschnitten nach unten möglich. Vorzugsweise weist die Abweisereinrichtung aber in dem Auswurfbereich einen Steg auf, der sich von der Oberseite des Sichelmähwerks aus nach unten erstreckt und die Aussparung nach oben begrenzt. Auf diese Weise wird die zuvor beschriebene Mulchwirkung minimiert bzw. gänzlich unterbunden. Ein derart ausgeführtes Mähwerk bewirkt eine gute Leitung des Materialauswurfs und eine besonders gute Schnittqualität sowie eine gleichmäßige Verteilung des ausgeworfenen Materials.

Es ist einfach in der Herstellung, wenn der Steg sich über den gesamten Auswurfbereich zumindest im wesentlichen senkrecht von der Oberseite des Mähwerks weg erstreckt.

Durch ein Ausführen des Steges in unterschiedlichen Breiten kann das Auswurfverhalten bzw. der Aufbau eines Unterdrucks innerhalb der Abweisereinrichtung beeinflußt werden. Es ist beispielsweise denkbar, unterschiedlich ausgeführte Abweisereinrichtungen für differierende Einsatzbedingungen, wie beispielsweise langes, kurzes oder liegendes, sowie nasses oder auch trockenes Gras, oder auch Einsätze, die insbesondere den Steg bilden, zum Anpassen einer vorzugsweise fest in dem Mähwerk vorgesehenen Abweisereinrichtung zur Verfügung zu stellen. Der Steg erstreckt sich vorzugsweise über weniger als die Hälfte der vertikalen Gesamtausdehnung der Abweisereinrichtung. Es ist beispielsweise denkbar, daß er etwa zwischen einem Viertel bis einem Drittel dieser Ausdehnung aufweist.

Der Auswurfbereich kann in einem bezogen auf die Betriebsrichtung des Mähwerks seitlichen Bereich der Abweisereinrichtung angeordnet sein. Besonders günstig ist es aber, wenn er in einem rückwärtigen Bereich angeordnet ist, so daß es zu keinem neuerlichen Überfahren und Aufwirbeln von Pflanzenabschnitten während des Mähens eines benachbarten Mähstreifens kommt.

Um eine größere Mähbreite abzudecken, kann das Mähdeck mehrere Mähmesser aufweisen, die zumindest im wesentlichen nebeneinander angeordnet sind. Es ist denkbar, daß nur einzelne der Mähmesser, beispielsweise die äußeren oder mittleren Mähmesser, durch die Abweisereinrichtung umschlossen werden. Vorzugsweise umschließt die Abweisereinrichtung aber alle Mähmesser, so daß ein gleichmäßiger Auswurf sowie eine ebensolche Zerkleinerung gefördert wird.

Insbesondere bei der Verwendung von drei oder mehr Mähmessern können diese auch derart versetzt angeordnet sein, daß sich die Schnittkreise überlappen, so daß es zu einer vollständigen Überdeckung und somit einem vollständigen Schneiden des zu mähenden Bereichs kommt. Hierbei kann wenigstens ein Mähwerk bezogen auf die übliche Betriebsrichtung des Mähwerks nach vorn versetzt sein. Vorzugsweise ist aber wenigstens ein mittleres Mähwerk in Richtung des Auswurfs bzw. nach rückwärts versetzt angeordnet, so daß von diesem Messer abgeworfenes Gut nicht in den Schneidkreis der übrigen Messer gerät. Auf diese Weise wird ein gleichmäßigerer Auswurf bzw. eine gleichmäßigere Verteilung erzielt.

Besonders einfach in der Herstellung ist es, wenn die Abweisereinrichtung bzw. deren Wandung Ringe aufweist bzw. durch solche gebildet wird. Diese Ringe können vollständig oder auch zumindest annähernd kreisförmig ausgebildet sein, es ist aber auch eine ovale oder unregelmäßigere Form denkbar, beispielsweise wenn innerhalb der Abweisereinrichtung weitere Abweiser oder Leiteinrichtungen vorgesehen sind. Es ist eine Herstellung der Wandung bzw. der Ringe aus unterschiedlichen Materialien, wie beispielsweise aus Kunststoff oder aus Verbundwerkstoffen denkbar. Insbesondere bei Maschinen für den professionellen bzw. kommerziellen Einsatz wird üblicherweise eine Herstellung aus einem Metallwerkstoff aufgrund der erforderlichen Robustheit bevorzugt.

Die Abweisereinrichtung bzw. deren Wandung kann die jeweiligen Mähmesser vollständig voneinander abgrenzen. Ist zwischen den Mähmessern aber wenigstens ein Übergangsbereich vorgesehen, der einen Übertritt von Material von einem Mähmesser zu einem weiteren Mähmesser zuläßt, so begünstigt dies eine gleichmäßige Verteilung der ausgeworfenen Pflanzenabschnitte sowie einen Ausgleich der Menge an geschnittenem Material innerhalb der Abweisereinrichtung. In einem solchen Übergangsbereich kann hierzu beispielsweise eine Aussparung vorgesehen sein, vorzugsweise weist er aber einen nach unten offenen Ausschnitt auf, da hierbei nur eine geringe Gefahr von Verstopfungen besteht. Die Übergangsbereiche sind vorzugsweise in solchen Bereichen angeordnet, in denen die Schneidkreise der Mähmesser bzw. die sie umhüllende Wandung nur einen geringen Abstand abweisen oder auch aneinander angrenzen, so daß ein ungehinderter Übertritt von Material und Luft möglich wird. Ein solcher Übergangsbereich ist im Geist der vorliegenden Erfindung insbesondere auch dann von Vorteil, wenn die Mähmesser derart angeordnet sind, daß sich ihre Schneidkreise in diesem Übergangsbereich überschneiden. Eine solche Anordnung findet Verwendung, um ein vollständiges Mähen von Gras bzw.Vegetation über die gesamte durch die Mähmesser überdeckte Breite des Mähwerks zu gewährleisten, ohne daß die Gefahr besteht, daß zwischen den einzelnen Schneidkreisen einzelne Pflanzen bzw. Pflanzenstreifen verbleiben.

Erstreckt sich die Abweisereinrichtung in ihrem geschlossenen Bereich zumindest im wesentlichen bis zu einer Schneidkante der Mähmesser, so werden zu schneidende Pflanzen bzw. zu schneidendes Gras durch die Abweisereinrichtung nicht niedergedrückt bevor sie in den Schneidkreis der Mähmesser gelangen können.

Eine Abweisereinrichtung, die zur Verwendung in einem zuvor beschriebenen Mähwerk ausgebildet ist, kann in einem Mähwerk fest oder auch lösbar vorgesehen sein. Es ist auch denkbar, Mähwerke, insbesondere Mähwerke mit Heckauswurf, mit einer solchen Abweisereinrichtung nachzurüsten. Ist die Abweisereinrichtung derart ausgebildet, daß sie mit einem Mähwerk lösbar verbunden werden kann, so kann sie entsprechend den jeweiligen Einsatzbedingungen an dem Mähwerk angebracht werden bzw. das Mähwerk ohne eine solche betrieben werden, wenn dies durch eine Bedienungsperson gewünscht werden sollte. Darüber hinaus ist es denkbar, an die jeweiligen Einsatzbedingungen angepaßte Abweisereinrichtungen zur Verfügung zu stellen, die sich beispielsweise in ihrer Geometrie, beispielsweise wie zuvor beschrieben, in der Erstreckung bzw. Breite der Wandung bzw. des Stegs unterscheiden können.

Bei Fahrzeugen bzw. Geräten, die mit einem beschriebenen Mähwerk mit einer Abweisereinrichtung ausgestattet werden können, handelt es sich vorzugsweise um Fahrzeuge bzw. Geräte zur Rasen-, Garten- bzw. Grundstückspflege. Solche Fahrzeuge können ein Mähwerk oder auch mehrere Mähwerke aufweisen, wobei diese an einer Frontseite, einer Rückseite, an den Seiten des Fahrzeugs bzw. Geräts oder auch unterhalb desselben angeordnet sein können. Solche Fahrzeuge kommen beispielsweise in der Pflege von Gärten, Golf- und Sportplätzen und in Parks und Grünanlagen zum Einsatz. Es kann sich hierbei sowohl um selbstfahrende Fahrzeuge bzw. Geräte oder auch um geschobene oder handgeführte Geräte handeln.

In der Zeichnung ist ein nachfolgend näher beschriebenes Ausführungsbeispiel der Erfindung dargestellt. Es zeigt:
- Fig. 1: ein Fahrzeug mit einem vorderen und einem seitlichen Mähwerk,
- Fig. 2: ein Mähwerk entsprechend dem vorderen Mähwerk aus Fig. 1 in einer Ansicht von unten und bezogen auf die übliche Betriebsrichtung vorn, wobei eine unterhalb des Mähwerks angeordnete Abweisereinrichtung und zugeordnete Mähmesser sichtbar sind, und
- Fig. 3: ein Gehäuse des Mähwerks aus Fig. 1 mit drei Mähmessern in einer explosionsartigen Darstellung.

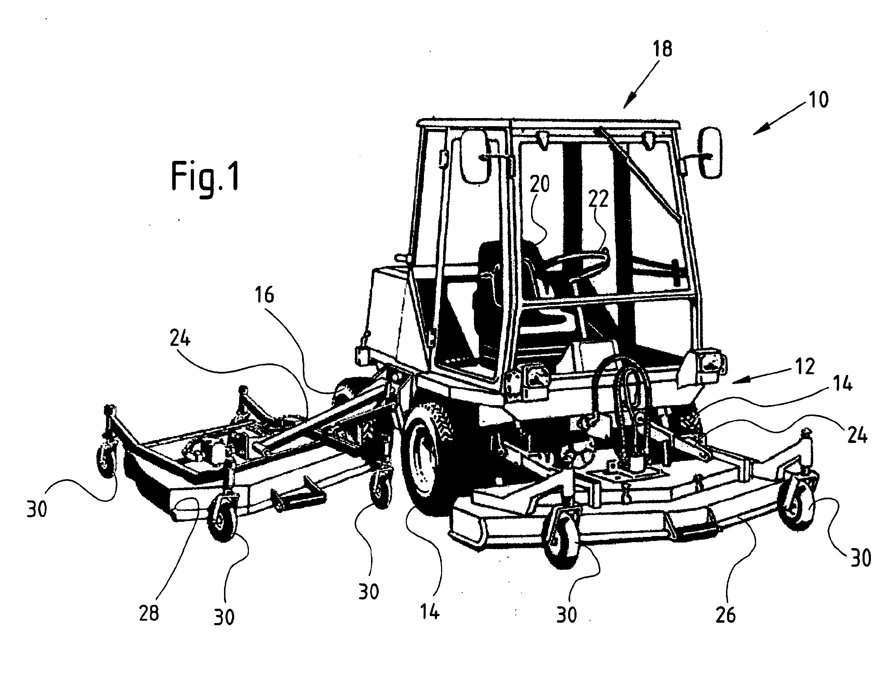

Es soll nun zuerst auf Figur 1 Bezug genommen werden, in der ein Fahrzeug 10 in der Art eines Nutzfahrzeugs, wie es beispielsweise im kommunalen Bereich zur Pflege von Parkanlagen und Grünflächen eingesetzt wird, gezeigt wird. Das Fahrzeug 10 weist einen Rahmen 12 auf, der sich über zwei vordere lenkbare Räder 14 sowie über zwei rückwärtige, antreibbare Räder 16 auf dem Untergrund abstützt. Auf dem Rahmen 12 ist eine Bedienerplattform 18 in Form einer Kabine vorgesehen, in der ein Bedienersitz 20, ein Lenkrad 22 sowie nicht näher dargestellte, übliche Mittel zur Steuerung des Fahrzeugs 10 vorgesehen sind.

An dem Rahmen 12 sind in einem vorderen und einem seitlichen Bereich Tragarme 24 vorgesehen, an die jeweils ein Mähwerk 26, 28 in bekannter Weise beweglich angeschlossen ist, so daß sie der Kontur des Untergrundes folgen können. An den Mähwerken 26, 28 sind Nachlaufräder 30 vorgesehen, über die sich die Mähwerke 26, 28 auf dem Untergrund abstützen können und die darüber hinaus eine gleichbleibende Distanz zwischen dem Untergrund und dem Mähwerk 26 und damit eine gleichbleibende Schnitthöhe gewährleisten. Die Nachlaufräder 30 können verstellbar vorgesehen sein, so daß die Schnitthöhe über eine Verstellung der Nachlaufräder 30 bewirkt werden kann.

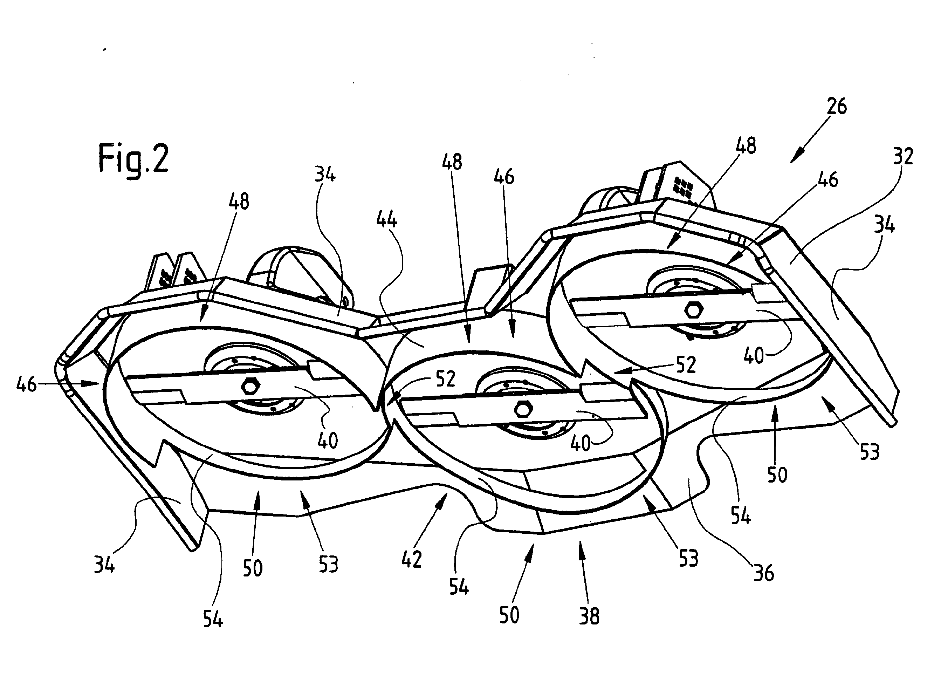

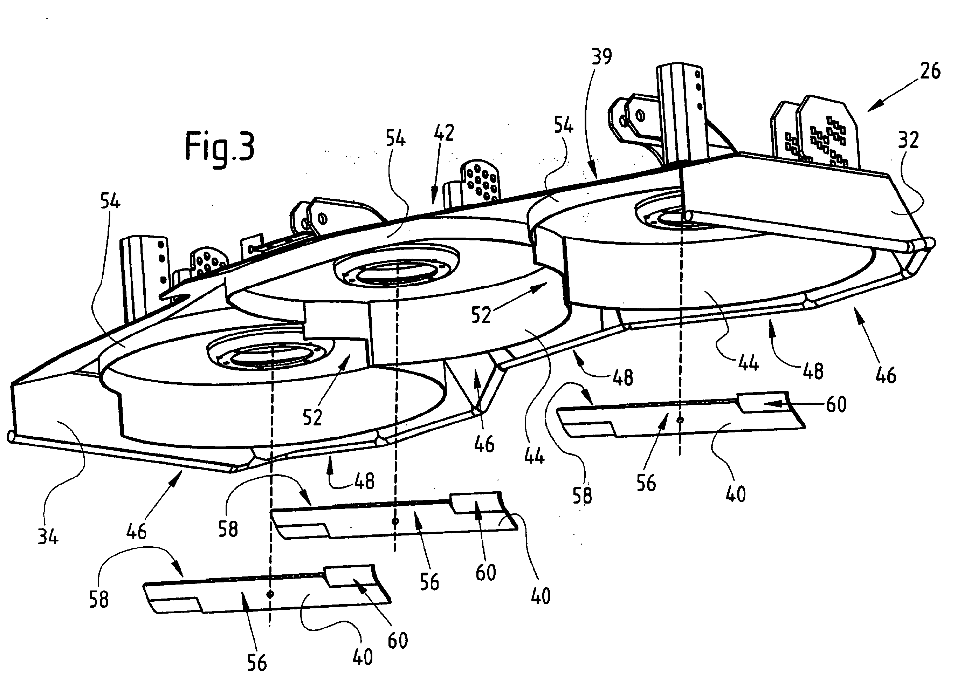

Im folgenden soll auf das vordere Mähwerk 26 eingegangen werden, das in den Figuren 2 und 3 von dem Fahrzeug 10 getrennt genauer dargestellt wird. Eine entsprechend angepaßte Ausführung eines seitlichen Mähwerks 28 oder auch eines unterhalb des Fahrzeugs 10 oder in einem rückwärtigen Bereich vorgesehenen Mähwerks ist aber ebenso möglich.

Das Mähwerk 26 weist ein Gehäuse 32 mit drei nach unten gezogenen Seitenflächen 34, einer bezogen auf die übliche Betriebsrichtung des Fahrzeugs nach rückwärts gerichteten Auswurfseite 36, in der eine Auswurföffnung 38 vorgesehen ist, sowie mit einer Oberseite 39 auf. Die Oberseite 39 erstreckt sich im wesentlichen zumindest während des Betriebs in der Horizontalen. In Richtung der Auswurfseite 36 hin ist sie allerdings in üblicher Weise in der Art einer Leiteinrichtung ausgeführt und leicht nach unten abgekröpft.

Unterhalb des Gehäuses 32 sind drei Mähmesser 40 in der Art von Sichelmessern angeordnet. Diese Mähmesser 40 werden in bekannter Art durch an der Oberseite 39 des Gehäuses 32 vorgesehene, in Figur 1 nur andeutungsweise gezeigte Mittel angetrieben. Bei diesen Mitteln kann es sich beispielsweise um einen von dem Fahrzeug 10 aus antreibbaren Riemenantrieb handeln, so daß Antriebsenergie beispielsweise von dem Fahrzeugantrieb oder ein separat vorgesehener Antrieb über Riemen an Riemenscheiben weitergegeben wird, die wiederum Wellen antreiben, die mit den Mähmessern 40 direkt oder indirekt verbunden sind bzw. auf die die Mähmesser 40 aufgesetzt sind. Die Mähmesser 40 sind von einer ebenfalls unterhalb des Gehäuses 32 angeordneten und mit diesem fest, beispielsweise durch ein Verschweißen, oder lösbar, beispielsweise durch ein Verschrauben, verbundenen Abweisereinrichtung 42 umgeben.

Die Abweisereinrichtung 42 weist eine Wandung 44 auf, die die Mähmesser 40 bzw. die von ihnen gebildeten Hüllkreise vollständig umschließt und daher eine Kontur aufweist, die in der Art mehrerer nebeneinander bzw. auch versetzt zueinander angeordneter Ringe 46 ausgebildet ist. Die Wandung 44 weist einen gewissen Abstand zu den Hüllkreisen der Mähmesser 40 auf.

Die Ringe 46 weisen jeweils einen geschlossenen Bereich 48, einen Auswurfbereich 50 sowie einen Übergangsbereich 52 auf. In dem geschlossenen Bereich 48 reicht die Wandung 44 vorzugsweise etwa bis zur Unterkante der Schneidkanten der Mähmesser 40. In den Auswurfbereichen 50 weisen die Ringe 46 ausgeschnittene Bereiche bzw. Aussparungen 53 auf, so daß der Ring 46 von der rückwärtigen Seite aus betrachtet, wie dies in Fig. 3 dargestellt ist, schmaler ist als in den übrigen Bereichen 48, 52. Die Wandung 44 bildet in den Auswurfbereichen 50 einen verhältnismäßig schmalen Steg 54, der sich von der Oberseite 39 des Gehäuses 32 weg erstreckt, wobei er dabei der gekröpften Kontur der Oberseite 39 in Richtung der Auswurfseite 36 folgt. Die Breite des Stegs 54 bzw. seine Erstreckung von der Oberseite 39 weg ist über die gesamte Breite des Auswurfbereichs 50 zumindest im wesentlichen gleich ausgeführt; es ist im Rahmen der vorliegenden Erfindung aber auch denkbar, den Steg 54 derart auszuführen, daß sich eine Aussparung 53 ergibt, die über ihre gesamte Erstreckung eine im wesentlichen gleiche Höhe aufweist. Die Übergangsbereiche 52 sind an Stellen der Wandung 44 angeordnet in denen sich die einzelnen Ringe 46 berühren bzw. in denen diese aneinander angrenzen und ermöglichen ein Überschneiden der Schneidkreise der Mähmesser 44. Die Ringe 46 sind in den Übergangsbereichen 52 weniger schmal ausgeführt als in den geschlossenen Bereichen 48, aber breiter als in den Auswurfbereichen 50, so daß sie weniger weit von der Oberseite 39 des Gehäuses 32 nach unten ragen als in den geschlossenen Bereichen 48 bzw. weiter als in den Auswurfbereichen 50.

Die Auswurfbereiche 50 bzw. die Aussparungen 53 erstrecken sich in dem dargestellten Ausführungsbeispiel bei dem mittleren der drei Ringe 34 über in etwa die Hälfte des Ringumfangs. Bei den beiden seitlich angeordneten Ringen 34 sind die Aussparungen etwas schmaler ausgeführt.

Die Mähmesser 40 weisen ein zumindest im wesentlichen rechteckiges Messerblatt 56 auf, welches, an sich bezogen auf die Drehachse des Mähmessers 40, punktsymmetrisch gegenüberliegenden Eckbereichen Schneidkanten 58 aufweist. Die beiden übrigen Eckbereiche sind als Flügel 60 ausgebildet, die in der Art eines Gebläses wirken können, wenn das Mähmesser 40 durch den nicht näher dargestellten Antrieb in Rotation versetzt wird.

Im folgenden soll nun auf die Wirkungsweise des gezeigten Mähwerks 26 eingegangen werden.

Um Gras und allgemein Pflanzenbewuchs zu schneiden, wird das Mähwerk 26 durch das Fahrzeug 10 über den Untergrund bewegt. Die Mähmesser 40 werden durch den nicht näher dargestellten Antrieb derart in Rotation versetzt, daß die Schneiden 58 den Flügeln 60 vorauseilen und die Vegetation abtrennen. Die Flügel 60 wirken bei rotierenden Mähmessern 40 in der Art eines Gebläses, so daß sie einen Luftstrom nach oben in Richtung der Oberseite 39 des Gehäuses 32 und eine Art Unterdruck bewirken. Hierdurch wird das zu schneidende Gras angesaugt, um einen besseren Schnitt zu bewirken. Darüber hinaus werden die geschnittenen Pflanzenabschnitte durch die Schneide 58 und durch den erzeugten Luftstrom nach oben und in der Drehrichtung der Mähmesser 40 beschleunigt, so daß sie sich zumindest annähernd tangential von der Schneidkante 58 wegbewegen. In dem geschlossenen Bereich 48 des Ringes 46 können die geschnittenen Abschnitte den Abweiser 42 nicht verlassen und prallen von der Wandung 44 ab und gelangen wieder in den durch die Flügel 60 erzeugten Sog oder fallen nach unten aus dem Gehäuse 32. In den Auswurfbereichen 50 hingegen können die Pflanzenabschnitte den Ring 46 durch die Aussparung 53 verlassen. Es gelangen aber nicht alle der durch die Mähmesser 40 in Richtung der Auswurfbereiche 50 beschleunigten Pflanzenabschnitte durch die Aussparung 53 aus der Abweisereinrichtung 42 hinaus. Ein Teil der Pflanzenabschnitte prallt gegen den Steg 54 und gelangt wieder in den Wirkungsbereich der Mähmesser 40.

Die Ausbildung der Auswurfbereiche 50 als im wesentlichen offenen Bereich, der an seiner Oberseite einen schmalen Steg 54 aufweist, bewirkt ein günstiges Auswurfverhalten. Aufgrund der großzügigen Aussparungen 53 kommt es zu keiner Verstopfung derselben durch Pflanzenabschnitte. Darüber hinaus wird ein Hinausgelangen von Pflanzenabschnitten nicht durch den Steg 54 behindert, wohingegen dieser aber dafür sorgt, daß sich innerhalb der Abweisereinrichtung 42 durch die rotierenden Mähmesser ein Unterdruck aufbauen kann, so daß zu schneidende Vegetation sowie bereits geschnittene Pflanzenabschnitte in Richtung der Mähmesser gezogen werden.

## Patentansprüche

1. Mähwerk (26, 28) mit einem zumindest bodenwärts offenen und in einer Auswurfrichtung eine Auswurföffnung (38) aufweisenden Gehäuse (32), wenigstens einem in dem Gehäuse (32) angeordneten, antreibbaren Mähmesser (40), sowie einer in dem Gehäuse angeordneten Abweisereinrichtung (42), die das Mähmesser (40) entlang seines Schneidkreises zumindest im wesentlichen umschließt und in einem der Auswurföffnung (38) zugewandten Auswurfbereich (50) wenigstens eine Aussparung (53) aufweist, welche sich zumindest im wesentlichen, über die gesamte Breite des Auswurfbereichs (50) erstreckt, **dadurch gekennzeichnet**, daβ sich die Aussparung (53) über ihre gesamte Erstreckung eine zumindest im wesentlichen gleiche Höhe aufweist.

2. Mähwerk nach Anspruch 1, **dadurch gekennzeichnet, daß** die Aussparung (53) zumindest in vertikaler Richtung durch einen Steg (54) begrenzt wird, der über die gesamte Erstreckung der Aussparung (53) eine zumindest im wesentlichen gleiche Höhe aufweist.

3. Mähwerk nach Anspruch 1 oder 2, **dadurch gekennzeichnet, daß** sich der Steg (54) zumindest im wesentlichen senkrecht von einer Oberseite (39) der Abweisereinrichtung (42) aus nach unten erstreckt.

4. Mähwerk nach einem oder mehreren der vorherigen Ansprüche, **dadurch gekennzeichnet, daß** sich die Aussparung (53) zumindest im wesentlichen über mehr als die Hälfte der Höhe des geschlossenen Bereichs der Abweisereinrichtung (42) erstreckt.

5. Mähwerk nach einem oder mehreren der vorherigen Ansprüche, **dadurch gekennzeichnet, daß** der Auswurfbereich (50) zumindest im wesentlichen auf einer, bezogen auf die übliche Betriebsrichtung des Mähwerks (26, 28), rückwärtigen Seite der Abweisereinrichtung (42) angeordnet ist.

6. Mähwerk nach einem oder mehreren der vorherigen Ansprüche, **gekennzeichnet durch** mehrere, vorzugsweise drei Mähmesser (40), die von der Abweisereinrichtung (42) vorzugsweise vollständig umschlossen werden.

7. Mähwerk nach Anspruch 6, **dadurch gekennzeichnet, daß** wenigstens ein mittleres Mähmesser (40) bezogen auf die übliche Betriebsrichtung des Mähwerks (26, 28) gegenüber den übrigen Mähmessern (40) nach rückwärts versetzt angeordnet ist.

8. Mähwerk nach Anspruch 6 oder 7, **dadurch gekennzeichnet, daß** die Abweisereinrichtung (42) Ringe (46) aufweist bzw. zumindest teilweise durch solche gebildet wird, die jeweils ein Mähmesser (40) umschließen, wobei die Ringe (46) vorzugsweise aneinander angrenzend angeordnet sind.

9. Mähwerk nach einem oder mehreren der Ansprüche 6 bis 8, **dadurch gekennzeichnet, daß** die Abweisereinrichtung (42) zwischen den Mähmessern (40) wenigstens einen Übergangsbereich (52) mit einem Ausschnitt aufweist, dessen Höhe geringer ist als die der Aussparung (53).

10. Mähwerk nach einem oder mehreren der vorherigen Ansprüche, **dadurch gekennzeichnet, daß** sich die Abweisereinrichtung (42) in ihrem geschlossenen Bereich zumindest im wesentlichen bis zu einer Schneidkante der Mähmesser (40) erstreckt.

11. Fahrzeug (10) bzw. Gerät mit zumindest einem Mähwerk (26, 28) nach einem oder mehreren der vorherigen Ansprüche.

## Claims

1. Mower (26, 28) with a housing (32) which is open at least towards the ground and which has an ejection opening (38) in an ejection direction, at least one mower blade (40) which is disposed in the housing (32) and can be driven and also a deflection device (42) which is disposed in the housing and encloses the mower blade (40) at least substantially along its cutting arc and has at least one recess (53) in an ejection region (50) which is orientated towards the ejection opening (38), which recess extends at least substantially over the entire width of the ejection region (50), **characterised in that** the recess (53) has at least substantially the same height over its entire extension.

2. Mower according to claim 1, **characterised in that** the recess (53) is delimited at least in the vertical direction by a bar (54) which has at least substantially the same height over the entire extension of the recess (53).

3. Mower according to claim 1 or 2, **characterised in that** the bar (54) extends substantially perpendicularly from an upper side (39) of the deflection device (42) downwards.

4. Mower according to one or more of the preceding claims, **characterised in that** the recess (53) extends at least substantially over more than half of the height of the closed region of the deflection device (42).

5. Mower according to one or more of the preceding claims, **characterised in that** the ejection region (50) is disposed at least substantially on a rear side of the deflection device (42), relative to the normal operating direction of the mower (26, 28).

6. Mower according to one or more of the preceding claims, **characterised by** a plurality of mower blades (40), preferably three, which are preferably completely enclosed by the deflection device (42).

7. Mower according to claim 6, **characterised in that** at least one central mower blade (40), relative to the normal operating direction of the mower (26, 28), is disposed offset to the rear relative to the remaining mower blades (40).

8. Mower according to claim 6 or 7, **characterised in that** the deflection device (42) has rings (46) or is formed at least partially by those which enclose one mower blade (40) respectively, the rings (46) being disposed preferably adjacent to each other.

9. Mower according to one or more of the claims 6 to 8, **characterised in that** the deflection device (42), between the mower blades (40), has at least one transition region (52) with a cut-out, the height of which is less than that of the recess (53).

10. Mower according to one or more of the preceding claims, **characterised in that** the deflection device (42) extends in its closed region at least substantially up to a cutting edge of the mower blades (40).

11. Vehicle (10) or apparatus with at least one mower (26, 28) according to one or more of the preceding claims.

## Revendications

1. Mécanisme de coupe (26, 28) comportant un carter (32), ouvert au moins vers le sol et comportant une ouverture d'éjection (38) dans une direction d'éjection, au moins une lame de coupe (40), agencée dans le carter (32) et apte à être actionnée, ainsi qu'un déflecteur (42), qui est agencé dans le carter (32) et qui entoure au moins sensiblement la lame de coupe (40) suivant son cercle de coupe et comporte au moins un évidement (53) dans une zone d'éjection (50) orientée vers l'ouverture d'éjection (38), lequel s'étend au moins sensiblement sur toute la largeur de la zone d'éjection (50), **caractérisé en ce que** l'évidement (53) comporte sur toute son étendue une hauteur sensiblement identique.

2. Mécanisme de coupe selon la revendication 1, **caractérisé en ce que** l'évidement (53) est délimité au moins dans la direction verticale par un bord (54) qui a au moins sensiblement la même hauteur sur toute l'étendue de l'évidement (53).

3. Mécanisme de coupe selon la revendication 1 ou 2, **caractérisé en ce que** le bord (54) s'étend au moins sensiblement dans le sens vertical depuis un côté supérieur (39) du déflecteur (42) vers le bas.

4. Mécanisme de coupe selon une ou plusieurs des revendications précédentes, **caractérisé en ce que** l'évidement (53) s'étend au moins sensiblement sur plus de la moitié de la hauteur de la zone fermée du déflecteur (42).

5. Mécanisme de coupe selon une ou plusieurs des revendications précédentes, **caractérisé en ce que** la zone d'éjection (50) est agencée au moins sensiblement sur le côté arrière du déflecteur (42), par rapport à la direction de déplacement habituel du mécanisme de coupe (26, 28).

6. Mécanisme de coupe selon une ou plusieurs des revendications précédentes, **caractérisé par** plusieurs, de préférence trois lames de coupe (40), qui sont de préférence entièrement entourées par le déflecteur (42).

7. Mécanisme de coupe selon la revendication 6, **caractérisé en ce qu'**au moins une lame de coupe (40) centrale est décalée, par rapport au sens de déplacement habituel du mécanisme de coupe (26, 28), vers l'arrière par rapport aux autres lames de coupe (40).

8. Mécanisme de coupe selon la revendication 6 ou 7, **caractérisé en ce que** le déflecteur (42) comporte des bagues (46) ou est formé au moins partiellement par de telles bagues, qui entourent chacune une lame de coupe (40), les bagues (46) étant de préférence adjacentes les unes aux autres.

9. Mécanisme de coupe selon une ou plusieurs des revendications 6 à 8, **caractérisé en ce que** le déflecteur (42) comporte entre les lames de coupe (40) au moins une zone de transition (52) avec une découpe dont la hauteur est inférieure à celle de l'évidement (53).

10. Mécanisme de coupe selon une ou plusieurs des revendications précédentes, **caractérisé en ce que** le déflecteur (42), dans sa zone fermée, s'étend au moins sensiblement jusqu'à une arête de coupe des lames de coupe (40).

11. Véhicule (10) ou machine comportant au moins un mécanisme de coupe (26, 28) selon une ou plusieurs des revendications précédentes.
